Europäisches Patentamt

European Patent Office

Office européen des brevets

(11) Publication number: **0 016 226**
**B1**

(12) **EUROPEAN PATENT SPECIFICATION**

(45) Date of publication of patent specification: **11.09.85**

(51) Int. Cl.⁴: **B 32 B 27/30, B 29 C 41/28**

(21) Application number: **78900299.5**

(22) Date of filing: **17.11.78**

(86) International application number:
**PCT/JP78/00029**

(87) International publication number:
**WO 79/00827 18.10.79 Gazette 79/21**

(54) **ACRYLIC SYNTHETIC RESIN PLATE.**

(30) Priority: **24.03.78 JP 33676/78**
**17.08.78 JP 100365/78**

(43) Date of publication of application:
**01.10.80 Bulletin 80/20**

(45) Publication of the grant of the patent:
**11.09.85 Bulletin 85/37**

(84) Designated Contracting States:
**DE**

(56) References cited:
**GB-A- 584 197**
**JP-A-48 025 746**
**JP-A-48 032 161**
**JP-A-53 051 288**
**JP-B-37 009 827**
**JP-B-42 006 266**
**JP-B-49 035 342**
**JP-B-49 036 829**

(73) Proprietor: **MITSUBISHI RAYON CO. LTD.**
**3-19, Kyobashi 2-chome Chuo-Ku**
**Tokyo 104 (JP)**

(72) Inventor: **TOYOOKA, Yasuo**
**3 Kaigandori Toyama-shi**
**Toyama 931 (JP)**
Inventor: **OHNISHI, Kunio**
**3 Kaigandori Toyama-shi**
**Toyama 931 (JP)**
Inventor: **MURASE, Haruo**
**3 Kaigandori Toyama-shi**
**Toyama 931 (JP)**
Inventor: **UENO, Tadaomi**
**Higashi A-2-103 3 Kaigandori Toyama-shi**
**Toyama 931 (JP)**

(74) Representative: **ter Meer, Nicolaus, Dipl.-**
**Chem.Dr. et al**
**Patentanwälte ter Meer, Müller, Steinmeister**
**Mauerkircherstrasse 45**
**D-8000 München 80 (DE)**

Courier Press, Leamington Spa, England.

## Description

### Technical Field

This invention relates to an acrylic synthetic resin sheet on which an acrylic film is integrally laminated and a method for its manufacture.

### Background Art

Hitherto, patterns or colors have been printed on acrylic synthetic resin sheets by screen printing, painting or offset printing, but these printing operations are complicated and require many workers and moreover the printing of patterns or colors on a large-sized sheet by these methods is nearly impossible.

It is also known to heat-bond an acrylic film on which patterns or colors are printed to an acrylic synthetic resin sheet. In this case, too, a great number of workers are needed and moreover it is also difficult to print patterns or colors on sheets of large size.

A prior art document, British Patent GB—A—1 274 516, discloses the production of solid resin articles by pouring a liquid prepolymer in a mold wherein a synthetic resin film is applied to the inner surface of a mold, thereafter the liquid prepolymer is poured into the mold and is heated to produce a solid resin article. In this method a resin film compatible with the prepolymer is being used as said synthetic resin film. Furthermore, said British patent discloses in its Examples that methyl methacrylate is used as the liquid prepolymer and polyvinyl chloride is used as the synthetic film and that in the case of the final resin being an acrylate resin, polyvinyl chloride, polyvinylidene chloride or polycarbonates are preferred as the compatible film.

Moreover, is case the final resin is an acrylate resin, use of the films as mentioned above results in wrinkles during production to damage the commercial value. The present invention is directed toward the solution of these defects.

The US-Patents US—A—3 872 197, US—A—3 988 098 and US—A—3 894 826 disclose the construction and operation of a continuous casting machine comprising a space formed by upper and lower travelling spans of highly polished metal belts heated from the outside, into which space a polymerizable syrup is fed, which continuously produces a travelling strip of polymerized synthetic resin. It is known that this continuously produced strip can be colored by incorporating colorants into the syrup fed to the machine. However, it has proven desirable to provide the strip with a more artistic appearance, for example such as can be provided potentially by the printing art. However, the finally cut sheets of the strip material are per se hard-surfaced, resistant to surface marking and substantially weather-proof, characteristics, which, however, are not enjoyed by printing applied to the surface of the sheet material.

### Disclosure of the Invention

The present invention provides an acrylic synthetic resin sheet on which an acrylic film is integrally laminated, obtained by a process comprising feeding the acrylic film and the acrylic synthetic resin in the form of a polymerizable liquid material comprising a monomer or monomer-polymer mixture onto a moving belt, causing the acrylic film to be partially swollen and dissolved by said monomer and then heating said polymerizable liquid material to cause it to polymerize and harden, and a method for its manufacture.

By the partial swelling and dissolving the acrylic film by said monomer said acrylic film becomes integral with the polymerized and hardened acrylic synthetic resin sheet.

Methyl methacrylate resin sheets can be used as the acrylic synthetic resin sheet in this invention and synthetic resin sheets which comprise copolymers of at least 90% by weight of methyl methacrylate and other copolymerizable monoethylenically unsaturated compounds and/or polyfunctional compounds may also be used.

Suitable monoethylenically unsaturated compounds are methacrylic esters, acrylic esters, styrene, or the like. Suitable polyfunctional compounds are methacrylic esters such as glycol dimethacrylate, diallyl methacrylate, or the like, diallyl phthalate, diethylene glycol bisallyl carbonate and mixtures thereof.

Alkyl methacrylate films are preferred as the acrylic film and examples thereof are those which are produced by polymerizing methyl methacrylate, ethyl methacrylate, butyl methacrylate, propyl methacrylate, alone or by copolymerizing two or more of them. Furthermore, if necessary, other copolymerizable components such as other acrylates, vinyl acetate, vinyl chloride, styrene, acrylonitrile, methacrylonitrile, etc. may be added thereto.

These acrylic films are preferably colorless and transparent when weather resistance or surface gloss is desired and those which are printed with patterns or colors are used when the final sheets are to be used as various decorative sheets, partitions, etc.

The method for producing the acrylic synthetic resin sheet with which an acrylic film is integrated will be explained below.

### Brief Description of the Drawings

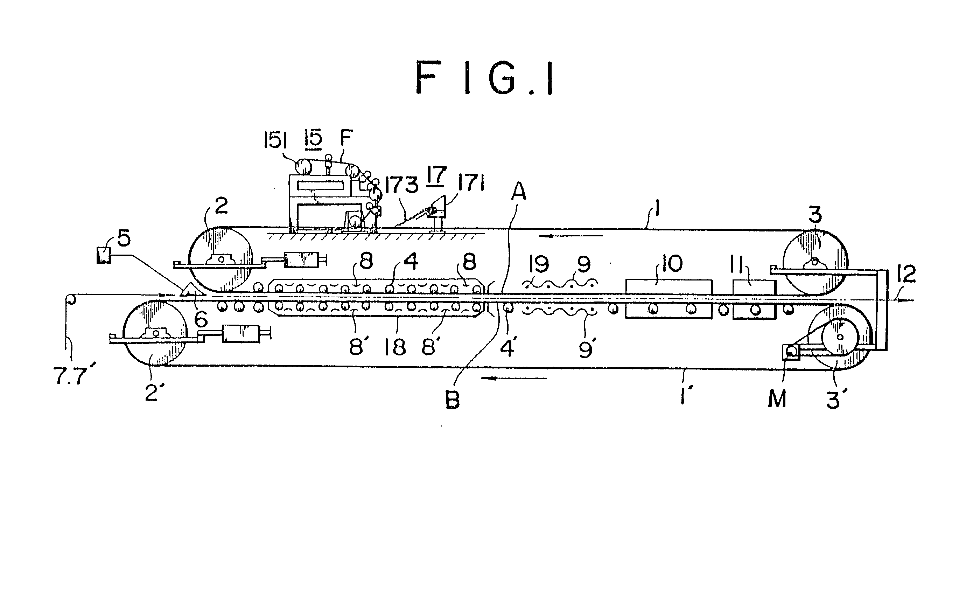

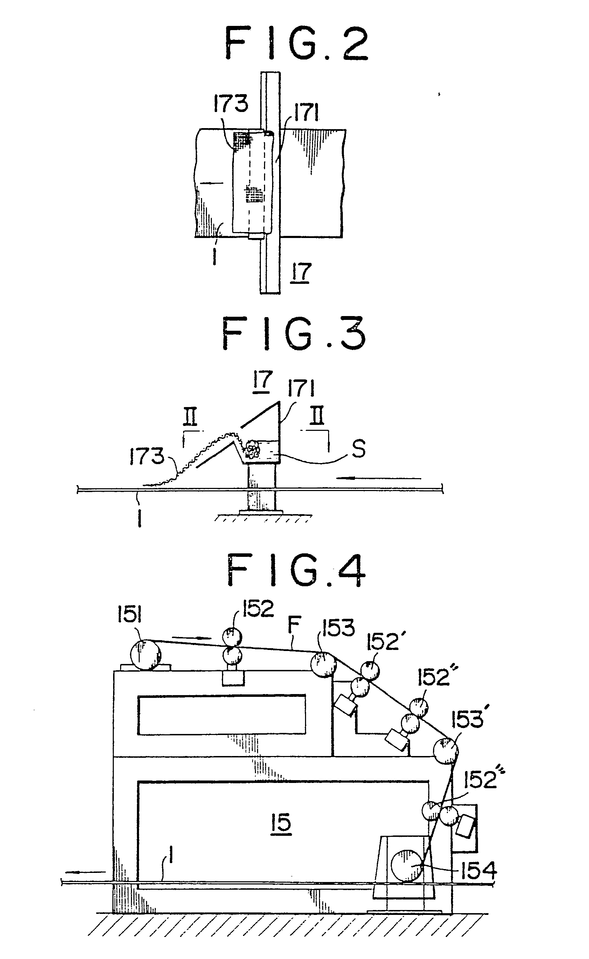

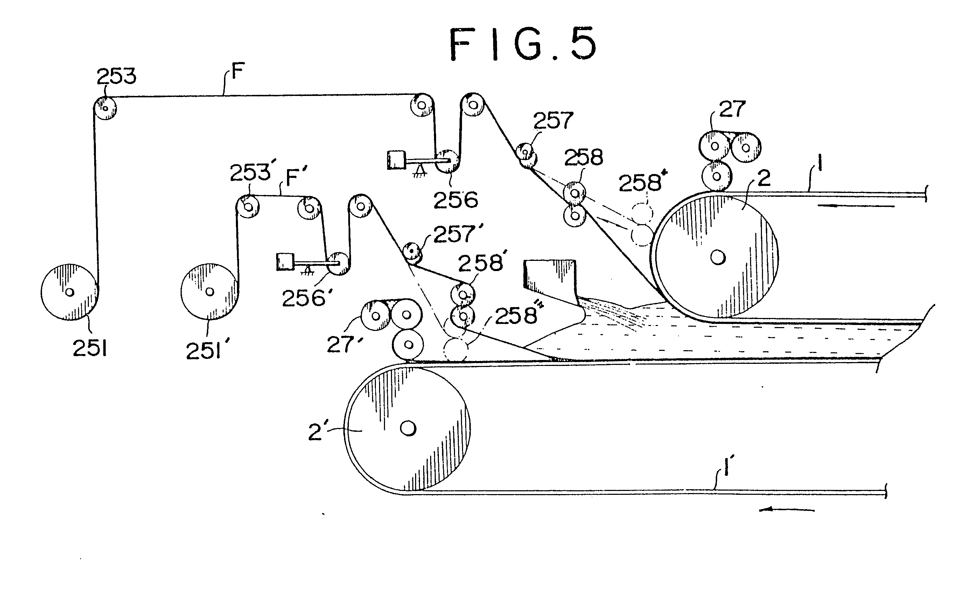

Fig. 1 is a longitudinal front section of an apparatus for producing the sheet of this invention. Fig. 2 is a section on line II—II of the device for coating with a monomer or a monomer-polymer mixture for the acrylic synthetic resin as shown in Fig. 3. Fig. 3 is a longitudinal front section of said coating device. Fig. 4 is a front view of a device for feeding the acrylic film. Fig. 5 is a longitudinal front section of a part of the other apparatus for producing the sheet of this invention.

As shown in Fig. 1, this invention employs a continuous sheet making method, namely, a method wherein polymerizable liquid material such as a monomer or monomer-polymer mixture for said acrylic synthetic resin is fed from one end to a space surrounded by opposite surfaces of two continuous endless belts 1 and 1' which are set in such a manner that the opposite surfaces thereof run in the same direction at the same speed and continuous gaskets 7 and 7' which run in such state are being put between the two belt surfaces at both side edge portions of the belts, and wherein the monomer or monomer-polymer mixture is polymerized and hardened by heating and cooling during its movement with running of the endless belts 1 and 1' and is taken out from another end of the endless belts 1 and 1' as an acrylic synthetic resin sheet. In the method of the invention simultaneously with the feeding of the monomer or the monomer-polymer mixture, an acrylic film is fed between the endless belts 1 and 1' along at least one of the endless belts or prior to the feeding of the monomer or the monomer-polymer mixture said monomer or monomer-polymer mixture is thinly coated on the surface of the endless belts and the film, sticking to said coated monomer or monomer-polymer mixture, is fed with running of the endless belts.

17 is a device for thinly coating said monomer or monomer-polymer mixture on the surface of the endless belt 1 and as shown in Fig. 2 and Fig. 3, said device comprises a container 171 for said monomer or monomer-polymer mixture and a gauze (fabric) 173.

Just after the coating device an acrylic film feeding device 15 is provided and as shown in Fig. 4 the acrylic film F is fed through feed roller 151, pinch rollers 152, 152', 152" and 152''' and guide rollers 153 and 153' and is continuously fed with running of belt 1 with being allowed to stick to upper belt 1 by press roller 154.

Fig. 5 shows another acrylic film feeding means, with which said monomer or monomer-polymer mixture is coated on the surfaces of the lower and upper belts 1 and 1' by means of the coating devices 27 and 27'.

Films F and F' are unwound from feeders 251 and 251' and are continuously fed through guide rollers 253 and 253', tension regulators 256 and 256', expander rollers 257 and 257' and feed rollers 258 and 258'. 258" and 258''' show the state of transfer of feed rollers 258 and 258', respectively, and are being allowed to stick to the monomer or monomer-polymer mixture coated on the surfaces of both upper and lower belts 1 and 1'.

The monomer or monomer-polymer mixture for said acrylic synthetic resin is poured into the space surrounded by the surfaces of the upper and lower belts 1 and 1' at least one of which has said thin films F and F' allowed to stick thereon.

The thus poured monomer or monomer-polymer mixture is transferred together with films F and F' with the running belts 1 and 1', during which said monomer of monomer-polymer mixture partially swells and dissolves said films F and F'. In the first polymerization zone 18 the monomer or monomer-polymer mixture is heated by spraying hot water of 60—95°C on the back surface of the upper and lower endless belts 1 and 1' by spray device 8 and 8'. By this heating said monomer or monomer-polymer mixture for the acrylic synthetic resin is polymerized and hardened into a polymerized and hardened product which becomes integral with said partially swollen and dissolved films F and F'. In the second polymerization zone 9 and 9' said product is heat treated to 115—150°C which is the temperature of the endless belts 1 and 1' provided by the far infrared heater 19. Subsequent to the second polymerization zone 9 and 9', said polymerization hardened product between the upper and lower endless belts 1 and 1' is cooled to lower than 105°C, preferably 100—80°C by passing it through the first cooling zone 10 and the second cooling zone 11 and is thereafter taken out from the other end of the opposite endless belts 1 and 1'.

The running speed of the endless belts 1 and 1' is suitably 0.5—4.0 m/min.

The thickness of the thus obtained acrylic synthetic resin sheet which is integrated with the acrylic film is preferably 2—12 mm.

Best Mode for Carrying Out the Invention

A methyl methacrylate monomer-polymer mixture (syrup) which contained about 30% by weight of methyl methacrylate polymer and had a viscosity of about 10 poises at 25°C was prepared by prepolymerizing methyl methacrylate monomer. In the resultant syrup were incorporated 650 ppm of azobisdimethylvaleronitrile as a polymerization catalyst and 30 ppm of dioctylsulfosuccinate (Aerosol OT, registered Trade Mark) as a releasing agent. As shown in Fig. 1, the resultant mixture was fed from feeding means 6 between the surfaces of the endless belts 1 and 1' at a fixed flow rate using gear pump 5. The endless belts 1 and 1' were made of polished stainless steel having a thickness of 1.5 mm and a width of 1500 mm and were given tension between pulleys 3 and 3' by pulleys 2 and 2' of 1600 mm in diameter. Tension of the endless belts 1 and 1' was set at 10 kg/mm$^2$ by hydraulic pressure and they ran at a speed of 3 m/min.

Film F of a copolymer of 64% by weight of methacrylate and 36% by weight of butyl acrylate which was printed with marble patterns and which had a thickness of 50 μ was fed to the upper belt 1 from film feeding device 15.

Prior to the feeding of the film F a methyl methacrylate syrup was thinly coated on the surface of the upper belt 1 by the coating device 17.

As shown in Fig. 2 and Fig. 3, said coating device 17 comprised syrup container 171 in which a methyl methacrylate syrup was stored and gauze 173 hung down onto the surface of the upper belt 1 from syrup container 171. Said syrup flowed down gauze 173 little by little on the surface of the upper belt 1.

As shown in Fig. 4, said film F was fed from feed roller 151 of said film feeding device 15 through pinch rollers 152, 152', 152" and 152''' and guide rollers 153 and 153' and ran with running of upper endless belt 1 with being allowed to stick to the upper endless belt 1 by press roller 154.

As mentioned above, the methyl methacrylate butyl acrylate copolymer film was then fed being held between the running two endless belts 1 and 1' together with the methyl methacrylate syrup supplied from feeding means 6.

The distance between the upper and lower endless belts 1 and 1' was kept by roller groups 4 and 4' which were arranged at the interval of 400 mm so that the obtained sheet-like methyl methacrylate polymer has a uniform thickness of 3 mm. Polyvinyl chloride hollow pipes which had an outer diameter of 13.0 mm and a wall thickness of 0.8 mm and contained dibutyl phthalate corresponding to 44% by weight of the polymer as a plasticizer were used as gaskets 7 and 7'.

The methyl methacrylate syrup fed into the space surrounded on one side by the surface of film F of said methyl methacrylate/butyl acrylate copolymer and which film ran sticking to the upper belt 1, along with the surface of the lower belt 1' and gaskets 7 and 7' into the first polymerization zone 18. This first polymerization zone 18 had a length of 66 m and was heated by spraying hot water of 84°C in the form of shower onto the back surface of the endless belts 1 and 1' by spraying devices 8 and 8'. Said methyl methacrylate syrup was mostly polymerized and hardened by said heating to obtain a sheet-like polymerization product. The film F of methyl methacrylate/butyl acrylate copolymer was partially swollen and dissolved with methyl methacrylate monomer in the methyl methacrylate syrup fed from one end of the two endless belts 1 and 1' during the period before it reached the first polymerization zone 18 and was integrally laminated with the sheet-like polymerization product formed by polymerization and hardening of the methyl methacrylate syrup, in the first polymerization zone 18.

The methyl methacrylate sheet-like polymerization product which became integral with the methyl methacrylate/butyl acrylate copolymer film in the film polymerization zone 18 moved together with the two endless belts 1 and 1' to the second polymerization zone 9. The second polymerization zone 9 had a length of 24 m and the endless belts 1 and 1' which contacted with said sheet-like polymerization product were heated to 140°C by far infrared heater 19. The temperature at the exit of the second polymerization zone 9 was 127°C.

Said sheet-like product which left the second polymerization zones 9 and 9' moved together with the endless belts 1 and 1' to the first cooling zone 10. The first cooling zone 10 had a length of 5.4 m and the sheet-like product was cooled to 103°C at a cooling rate of 14.4°C/min by vertically blowing air by means of a blower to the back surface of the endless belts 1 and 1'. The second cooling zone 11 had a length of 3 m and said sheet-like product was cooled to 80°C by blowing and taken out from endless belts 1 and 1'.

The taken out methyl methacrylate sheet-like polymerization product 12 which was integrated with the methyl methacrylate/butyl acrylate copolymer film had a thickness of 3 ± 0.3 mm, had a marble pattern appearance of excellent gloss and had no wrinkles. Furthermore, there occurred no phenomenon of separation of the methyl methacrylate/butyl acrylate copolymer film and the methyl methacrylate sheet-like product.

Industrial Applicability

As mentioned hereinbefore, according to this invention, an acrylic synthetic resin sheet having a good weather resistance and having a gloss surface can be easily obtained. Furthermore, the difficulties in directly printing patterns or colors on the conventional acrylic synthetic resin sheet are overcome by this invention. Moreover, as compared with acrylic synthetic resin sheets on which an acrylic film having patterns or colors printed thereon is bonded by heat, etc., wrinkles do not occur on the acrylic film of the sheet of this invention and the acrylic film does not separate from the acrylic synthetic resin sheet. In addition, as compared with acrylic synthetic resin sheets integrated with compatible films other than acrylic films, wrinkles are not produced on the sheet of this invention.

**Claims**

1. An acrylic synthetic resin sheet on which an acrylic film is integrally laminated, obtained by a process comprising feeding the acrylic film and the acrylic synthetic resin in the form of a polymerizable liquid material comprising a monomer or monomer-polymer mixture onto a moving belt, causing the acrylic film to be partially swollen and dissolved by said monomer and then heating said polymerizable liquid material to cause it to polymerize and harden.

2. The sheet of claim 1, characterized in that said synthetic resin sheet is a methyl methacrylate resin sheet.

3. The sheet of claim 1, characterized in that said synthetic resin sheet is a copolymer of at least 90% by weight of methyl methacrylate and other copolymerizable monoethylenically unsaturated compounds and/or polyfunctional compounds.

4. The sheet of claim 3, characterized in that said monoethylenically unsaturated compounds are selected from the group consisting of methacrylic esters, acrylic esters and styrene.

5. The sheet of claim 3, characterized in that said polyfunctional compounds are selected from the group consisting of glycol dimethacrylate, diallyl methacrylate, diallyl phthalate, diethylene glycol bisallyl carbonate and mixtures thereof.

6. The synthetic resin sheet of claim 1, characterized in that the thickness of said sheet is 1 mm—15 mm.

7. The sheet of claim 1, characterized in that said film has thereon a thin layer of synthetic resin having the same composition as that of the acrylic synthetic resin sheet.

8. The sheet of claim 1, characterized in that said film is a polymer prepared from monomers selected from the group consisting of methyl methacrylate, ethyl methacrylate, butyl methacrylate, propyl methacrylate and mixtures thereof.

9. The sheet of claim 1, characterized in that said film is colorless and transparent.

10. The sheet of claim 1, characterized in that said film is printed with patterns or colors.

11. A method for manufacturing the acrylic synthetic resin sheet according to claim 1, characterized by:

feeding an acrylic film and an acrylic synthetic resin in the form of a polymerizable liquid material comprising a monomer or a monomer-polymer mixture onto a moving belt;

causing said acrylic film to be partially swollen and dissolved by said monomer; and

polymerizing and hardening said polymerizable liquid material by heating.

12. The method of claim 11, characterized in that said polymerizable liquid material comprises as said monomer methyl methacrylate.

13. The method of claim 11, characterized in that said polymerizable liquid material comprises a monomer or monomer-polymer mixture of at least 90% by weight of methyl methacrylate and other copolymerizable monoethylenically unsaturated compounds and/or polyfunctional compounds.

14. The method of claim 13, characterized in that said monoethylenically unsaturated compounds are selected from the group consisting of methacrylic esters, acrylic esters and styrene.

15. The method of claim 13, characterized in that said polyfunctional compounds are selected from the group consisting of glycol dimethacrylate, diallyl methacrylate, diallyl phthalate, diethylene glycol bisallyl carbonate and mixtures thereof.

16. The method of claim 11, characterized in that said polymerizing is carried out in two polymerization zones, wherein the first zone is heated to a temperature of 60°C—95°C and the second zone is heated to a temperature of 115°C—150°C.

17. The method of claim 11, characterized in that said moving belt comprises continuous endless belts moving through polymerization zones and cooling zones.

**Revendications**

1. Feuille de résine acrylique de synthèse sur laquelle une pellicule acrylique est intégralement stratifiée, obtenue suivant un procédé consistant à amener sur une courroie en mouvement la pellicule acrylique et la résine acrylique de synthèse sous forme d'une matière liquide polymérisable comprenant un monomère ou un mélange monomère-polymère, à faire gonfler et dissoudre partiellement la pellicule acrylique par le monomère et ensuite à chauffer la matière liquide polymérisable afin de provoquer sa polymérisation et son durcissement.

2. Feuille selon la revendication 1, caractérisée en ce que la feuille de résine synthétique est une feuille de résine méthacrylate de méthyle.

3. Feuille selon la revendication 1, caractérisée en ce que la feuille de résine synthétique est un copolymère d'au moins 90% en poids de méthacrylate de méthyle et d'autres composés à insaturation monoéthylénique copolymérisables et/ou des composés polyfonctionnels.

4. Feuille selon la revendication 3, caractérisée en ce que les composés à insaturation monoéthylénique sont choisis dans le groupe comprenant les esters méthacryliques, les esters acryliques et le styrène.

5. Feuille selon la revendication 3, caractérisée en ce que les composés polyfonctionnels sont choisis dans le groupe comprenant le diméthacrylate de glycol, le méthacrylate de diallyle, le phtalate de diallyle, le bis-allylcarbonate de diéthylène glycol et leurs mélanges.

6. Feuille de résine synthétique selon la revendication 1, caractérisée en ce que l'épaisseur de la feuille est de 1 mm à 15 mm.

7. Feuille selon la revendication 1, caractérisée en ce que la pellicule est recouverte par une mince couche de résine synthétique ayant la même composition que la feuille de résine acrylique de synthèse.

8. Feuille selon la revendication 1, caractérisée en ce que la pellicule est un polymère préparé à partir de monomères choisis dans le groupe comprenant le méthacrylate de méthyle, le méthacrylate d'éthyle, le méthacrylate de butyle, le méthacrylate de propyle et leurs mélanges.

9. Feuille selon la revendication 1, caractérisée en ce que la pellicule est non colorée et transparente.

10. Feuille selon la revendication 1, caractérisée en ce que la pellicule est imprimée avec des motifs ou des couleurs.

11. Procédé de fabrication d'une feuille de résine acrylique de synthèse selon la revendication 1, caractérisé en ce que:

on amène sur une courroie en mouvement une pellicule acrylique et une résine acrylique de synthèse sous forme d'une matière liquide polymérisable comprenant un monomère ou un mélange monomère-polymère;

on fait gonfler partiellement la pellicule acrylique et la dissoudre par le monomère; et

Polymériser et durcir la matière liquide polymérisable par chauffage.

12. Procédé selon la revendication 11, caractérisé en ce que la matière liquide polymérisable comprend en tant que monomère du méthacrylate de méthyle.

13. Procédé selon la revendication 11, caractérisé en ce que la matière liquide polymérisable comprend un monomère ou un mélange monomère-polymère d'au moins 90% en poids de méthacrylate de méthyle et d'autres composés à insaturation monoéthylénique copolymérisables et/ou des composés polyfonctionnels.

14. Procédé selon la revendication 13, caractérisé en ce que les composés à insaturation monoéthylénique sont choisis dans le groupe comprenant les esters méthacryliques, les esters acryliques et le styrène.

15. Procédé selon la revendication 13, caractérisé en ce que les composés polyfonctionnels sont choisis dans le groupe comprenant le diméthacrylate de glycol, le méthacrylate de diallyle, le phtalate de diallyle, le bisallyl-carbonate de diéthylène glycol et leurs mélanges.

16. Procédé selon la revendication 11, caractérisé en ce que la polymérisation est conduite dans deux zones de polymérisation, la première zone étant chauffée à une température de 60° à 95°C et la seconde zone a une température de 115° à 150°C.

17. Procédé selon la revendication 11, caractérisé en ce que ledit courroie en mouvement comprend des courroies continues sans fin se déplaçant à travers les zones de polymérisation et de refroidissement.

## Patentansprüche

1. Blatt aus einem synthetischen Acrylharz, auf das ein Acrylfilm integral auflaminiert ist, erhalten mit Hilfe eines Verfahrens, welches darin besteht, den Acrylfilm und das synthetische Acrylharz in Form eines polymerisierbaren flüssigen Materials aus einem Monomer oder einer Monomer-Polymer-Mischung auf ein bewegtes Band aufzubringen, den Acrylfilm durch das Monomer teilweise zu quellen und zu lösen und dann das polymerisierbare flüssige Material zu erhitzen, um es zu polymerisieren und zu härten.

2. Blatt nach Anspruch 1, dadurch gekennzeichnet, daß das Blatt aus dem synthetischen Harz ein Blatt aus einem Methylmethacrylatharz ist.

3. Blatt nach Anspruch 1, dadurch gekennzeichnet, daß das Blatt aus dem synthetischen Harz ein Copolymer aus mindestens 90 Gew.-% Methylmethacrylat und anderen copolymerisierbaren, monoethylenisch ungesättigten Verbindungen und/oder polyfunktionellen Verbindungen ist.

4. Blatt nach Anspruch 3, dadurch gekennzeichnet, daß die monoethylenisch ungesättigten Verbindungen aus der Gruppe ausgewählt sind, die Methacrylester, Acrylester und Styrol umfaßt.

5. Blatt nach Anspruch 3, dadurch gekennzeichnet, daß die polyfunktionellen Verbindungen aus der Gruppe ausgewählt sind, die Glykoldimethacrylat, Diallylmethacrylat, Diallylphthalat, Diethylenglykolbisallylcarbonat und Mischungen davon umfaßt.

6. Blatt aus einem synthetischen Harz nach Anspruch 1, dadurch gekennzeichnet, daß die Dicke des Blattes 1 mm bis 15 mm beträgt.

7. Blatt nach Anspruch 1, dadurch gekennzeichnet, daß auf dem Film eine dünne Schicht aus einem synthetischen Harz vorliegt, welches die gleiche Zusammensetzung besitzt wie das Blatt aus dem synthetischen Acrylharz.

8. Blatt nach Anspruch 1, dadurch gekennzeichnet, daß der Film ein Polymer ist, welches aus Monomeren gebildet worden ist, die aus der Gruppe ausgewählt sind, die Methylmethacrylat, Ethylmethyacrylat, Butylmethacrylat, Propylmethacrylat und Mischungen davon umfaßt.

9. Blatt nach Anspruch 1, dadurch gekennzeichnet, daß der Film farblos und transparent ist.

10. Blatt nach Anspruch 1, dadurch gekennzeichnet, daß der Film mit Mustern oder Farben bedruckt ist.

11. Verfahren zur Herstellung des Blattes aus dem synthetischen Acrylharz nach Anspruch 1, dadurch gekennzeichnet, daß man einen Acrylfilm und ein synthetisches Acrylharz in Form eines polymerisierbaren flüssigen Materials aus einem Monomer oder einer Monomer-Polymer-Mischung auf ein bewegtes Band aufbringt;
den Acrylfilm durch das Monomer teilweise quillt und löst; und
das polymerisierbare flüssige Material durch Erhitzen polymerisiert und härtet.

12. Verfahren nach Anspruch 11, dadurch gekennzeichnet, daß das polymerisierbare flüssige Material das monomere Methylmethacrylat enthält.

13. Verfahren nach Anspruch 11, dadurch gekennzeichnet, daß das polymerisierbare flüssige Material ein Monomer oder eine Monomer-Polymer-Mischung aus mindestens 90 Gew.-% Methylmethacrylat und anderen copolymerisierbaren, monoethylenisch ungesättigten Verbindungen und/oder polyfunktionellen Verbindungen umfaßt.

14. Verfahren nach Anspruch 13, dadurch gekennzeichnet, daß die monoethylenisch ungesättigten Verbindungen aus der Gruppe ausgewählt sind, die Methacrylester, Acrylester und Styrol umfaßt.

15. Verfahren nach Anspruch 13, dadurch gekennzeichnet, daß die polyfunktionellen Verbindungen aus der Gruppe ausgewählt sind, die Glykoldimethacrylat, Diallylmethacrylat, Diallylphthalat, Diethylenglykolbisallylcarbonat und Mischungen davon umfaßt.

16. Verfahren nach Anspruch 11, dadurch gekennzeichnet, daß die Polymerisation in zwei Polymerisationszonen durchgeführt wird, wobei die erste Zone auf eine Temperatur von 60 bis 95°C und die zweite Zone auf eine Temperatur von 115 bis 150°C erhitzt sind.

17. Verfahren nach Anspruch 11, dadurch gekennzeichnet, daß das bewegte Band kontinuierliche endlose Bänder umfaßt, die sich durch die Polymerisationszonen und die Kühlzonen bewegen.

# F I G. I

# F I G . 2

# F I G . 3

# F I G . 4

# FIG.5